# EUROPÄISCHE PATENTSCHRIFT

(11) **EP 2 569 359 B1**
(45) Veröffentlichungstag und Bekanntmachung des Hinweises auf die Patenterteilung: **29.04.2015**
(21) Anmeldenummer: 11717674.3
(22) Anmeldetag: 09.05.2011
(51) Int. Cl.: C08K 5/103, C08L 75/08

(54) **THERMOPLASTISCHES POLYURETHAN ENTHALTEND GLYCERIN, DAS MIT MINDESTENS EINER ALIPHATISCHEN CARBONSÄURE VERESTERT IST ALS WEICHMACHER**
THERMOPLASTIC POLYURETHANE CONTAINING GLYCEROL ESTERIFIED WITH AT LEAST ALIPHATIC CARBOXYLIC ACID
POLYURÉTHANNE THERMOPLASTIQUE CONTENANT UN ESTER DE GLYCÉRINE AYANT AU MOINS UN MOTIF D'ACIDE CARBOXYLIQUE ALIPHATIQUE

(30) Priorität: 10.05.2010 EP 10162406
(43) Veröffentlichungstag der Anmeldung: 20.03.2013
(73) Patentinhaber: BASF SE, 67056 Ludwigshafen (DE)
(72) Erfinder: PRISSOK, Frank, 49448 Lemförde (DE); DUWENHORST, Jörn, 49448 Lemförde (DE); KAMM, Andre, 49163 Bohmte (DE)
(86) Internationale Anmeldenummer: PCT/EP2011/057389
(87) Internationale Veröffentlichungsnummer: WO 2011/141408

(56) Entgegenhaltungen:
- EP-A1- 0 989 324
- EP-A1- 1 059 328
- WO-A1-91/17196
- WO-A1-2010/027640
- WO-A1-2010/107583

## Beschreibung

Die vorliegende Erfindung betrifft hermoplastische Polyurethane, im Folgenden auch als TPU bezeichnet, enthaltend zumindest einen Weichmacher (i) auf der Basis von Glycerin.

Thermoplastische Polyurethane haben ein vielfältiges Anwendungsfeld. So finden sich thermopolastische Polyurethane in der Automobilindustrie, z.B. in Instrumententafelhäuten, in Folien, in Kabelummantelungen, in der Freizeitindustrie, als Funktions- und Designelement bei Sportschuhen, als Weichkomponente in Hart -Weichkombinationen.

Üblicherweise weisen thermoplastische Polyurethane einen Härtegrad von 80 Shore A bis 74 Shore D auf. Viele der oben genannten Anwendungen erfordern aber einen Härtegrad unterhalb der 80 Shore A. Aus diesem Grund ist es Stand der Technik, zu thermoplastischen Kunststoffen Weichmacher zuzugeben, mit denen die Shorehärte abgesenkt werden kann. Beispiele für gängige Weichmacher sind Benzoate, Phthalate und Phosphorsäureester.

Bei der Auswahl des Weichmachers ist bevorzugt darauf zu achten, dass das Produkt verträglich mit dem thermoplastischen Polyurethan ist. Verträglich bedeutet in diesem Zusammenhang, dass sich der Weichmacher während der für die Herstellung thermoplastischer Polyurethane üblichen Verfahren dem thermoplastischen Polyurethan zumischen lassen muss und dass der Weichmacher anschließend während der ganzen Zeit möglichst im Produkt verbleibt und nicht durch Ausschwitzen oder Ausdampfen verloren geht. Zudem sollten die mechanischen Eigenschaften des thermoplastischen Polyurethans, z.B. der Abrieb und die elastomeren Eigenschaften nicht schlechter werden. Viele weichgemachte thermoplastischen Polyurethane gehen in Anwendungen, die zudem dem Sonnenlicht ausgesetzt sind, z.B. Designelemente der Schuhindustrie. Hier ist es von Nachteil, wenn der Weichmacher zu einer Vergilbung des Produktes durch UV-Abbau beiträgt.

Die US 2007/0049685 beschreibt die Verwendung von Trimethylolalkane die mit aromatischen Carbonsäuren mit wenigstens 6 Kohlenstoffatomen und/oder aliphatischen Carbonsäuren mit wenigstens 7 Kohlenstoffatomen verestert sind.

Die Nachteile dieser Verbindungen sind, dass sie durch den hohen Anteil an langen, aliphatischen Kohlenwasserstoffketten bzw. aromatischen Kohlenwasserstoffen nur eine geringe Verträglichkeit mit den polaren Polyurethanen besitzen und hierdurch die Aufnahmekapazität als Weichmacher stark eingeschränkt ist. Zudem sind derartige Verbindungen auf der Basis von Trimethylolalkanen nicht für den Kontakt mit Lebensmittel, sowie als Bedarfsgegenstände im Kontakt zum menschlichen Körper zulässig. Weiterhin erfolgt die Herstellung von TPU üblicherweise bei sehr hohen Temperaturen von etwa 200 °C, die im Herstellungsprozess bis zum Endprodukt mehrmals über einen längeren Zeitraum auch an den verwendeten Weichmacher eine besondere Herausforderung darstellen. Der Weichmacher darf sich bei dieser Temperatur weder zersetzen, er darf nicht mit der Luftfeuchtigkeit reagieren, noch mit anderen Bestandteilen des TPU, das bei dem Erhitzungsvorgang üblicherweise einen Molekularmassenabbau durchläuft, der beim Abkühlen zumindest teilweise wieder zurückgeht. TPU wird üblicherweise als weißes oder gar transparentes Granulat ausgeliefert, so dass auch eine Verfärbung nicht gewünscht ist.

Die Aufgabe der vorliegenden Erfindung bestand somit darin, ein weichgemachtes thermoplastisches Polyurethan zu entwickeln, wobei der verwendete Weichmacher gut einarbeitbar sein soll, nicht ausbluten soll, nicht ausdampfen soll und gleichzeitig die Eigenschaften des Kunststoffes, wie Verarbeitbarkeit, Wärmestabilität, Transparenz und/oder Weißheit und UV-Stabilität verbessern soll, zumindest nicht nachteilig beeinflussen soll. Außerdem sollte der Weichmacher eine geringe Toxizität aufweisen, um beispielsweise auch in Lebensmitteln oder Materialien, die mit Lebensmitteln oder der menschlichen Haut in Berührung kommen eingesetzt werden können.

Die Aufgabe konnte gelöst werden durch thermoplastisches Polyurethan, enthaltend mindestens einen Weichmacher, wobei ein erster Weichmacher (i) auf der Basis von Glycerin beruht und mindestens eine Hydroxylgruppe des Glycerins mit einer Monocarbonsäure (ii) verestert ist, die 1, 2, 3, 4, 5 oder 6 Kohlenstoffatome, bevorzugt 2, 3 oder 4 Kohlenstoffatome, weiter bevorzugt 2 Kohlenstoffatome enthält. Diese Stoffgruppe wird im Weiteren als Glycerincarbonsäureester angesprochen. Weiter bevorzugt sind Glycerintricarbonsäureester und besonders bevorzugt handelt es sich um Glycerintriacetat.

Des Weiteren bezieht sich die Erfindung auf ein Verfahren zur Herstellung von thermoplastischen Polyurethan enthaltend Weichmacher wobei dem thermoplastischen Polyurethan während und/oder nach der Herstellung mindestens ein erfindungsgemäßer Weichmacher (i) zugesetzt wird sowie Verfahren zur Herstellung von Produkten aus den erfindungsgemäßen thermoplastischen Polyurethanen.
Ein weiterer Erfindungsgegenstand ist ein Produkt, das auf einem Polyurethan enthaltend zumindest einen Weichmacher (i), basiert, auch in Mischungen mit anderen Kunststoffen. Als thermoplastisches Polyurethan wird ein thermoplastisches Polyurethan angesprochen, das nur ein thermoplastisches Polyurethan enthält, d.h. eines, das im wesentlichen aus einem Isocyanat, Polyol, ggf. Kettenverlängerer und weiteren Zusatz- und Hilfsstoffen besteht, aber auch ein Gemisch verschiedener derartiger thermoplastischer Polyurethane.

Ein weiterer Bestandteil der Erfindung ist die Verwendung von Glycerin das mit mindestens einer aliphatischen Carbonsäure verestert ist als Weichmacher in thermoplastischen Polyurethanen.
Auch ein Bestandteil dieser Erfindung ist ein Verfahren zur Herstellung oder Beschichtung von Produkten wobei die thermoplastischen Polyurethan, enthaltend den mindestens einen erfindungsgemäßen Weichmacher (i), vor oder während des Verfahrens in einem Lösungsmittel gelöst werden.

Neben einer hervorragenden mechanischen Stabilität der mit dem erfindungsgemäßen Weichmacher weichgemachten Kunststoffe, zeigen diese Weichmacher eine geringe Neigung zum ausblühen, und sind zudem nicht toxisch bzw. weisen nur eine geringe Toxizität, verglichen mit anderen Weichmachern auf. Sie zeigen auch eine hohe Stabilität gegenüber den bei der TPU-Verarbeitung auftretenden Temperaturen, gleichzeitig werden die mechanischen Eigenschaften des TPU bei der Verarbeitung nicht negativ beeinflusst.
Die zu ihrer Herstellung benötigten Rohstoffe können zudem aus nachwachsenden Ressourcen gewonnen werden. Ein gute Verträglichkeit mit anderen, polaren Weichmachern, insbesondere Ester von Tricarbonsäuren, bietet die Möglichkeit von Weichmacherkombinationen um auf diesem Wege eine Materialmodifikation oder die Einstellung spezieller Eigenschaften, wie z.B. besonders niedrige Shorehärten zu erreichen. In bevorzugten Ausführungsformen beträgt die Shore A Härte gemessen nach DIN 53505 über 15 Shore A und gleichzeitig weniger als 60 Shore A, weiter bevorzugt weniger als 50 Shore A, noch weiter bevorzugt weniger als 40 Shore A, insbesondere weniger als 35 Shore A,
Weitere Vorteile der erfindungsgemäßen Weichmacher sind, dass eine gute Mischbarkeit auch mit polaren Polyurethanen besitzen und dadurch deutlich höher Anteile des Weichmachers eingearbeitet werden können, was zu niedrigeren Shore A Härten führt. Die genannten Vorteile sind in den bevorzugten Ausführungsformen besonders ausgeprägt.

In einer bevorzugten Ausführungsform wird neben dem erfindungsgemäßen Weichmacher (i) wenigstens ein weiterer Weichmacher eingesetzt, der bevorzugt ein Ester einer Tricarbonsäure ist.
Bevorzugt besitzt diese Tricarbonsäure eine aliphatische Struktur, wobei die aliphatische Struktur verzweigt ist und 4 bis 30 Kohlenstoffatome, weiter bevorzugt 4 bis 20 Kohlenstoffatome, besonders bevorzugt 5 bis 10 Kohlenstoffatome und ganz besonders bevorzugt 6 Kohlenstoffatome enthält. Dabei sind die Kohlenstoffe in der verzweigten aliphatisichen Struktur direkt über Einfach- oder Doppelbindung miteinander verbunden. Bevorzugt hat die aliphatische Struktur nur Einfachbindungen zwischen den Kohlenstoffen.

In einer weiter bevorzugten Ausführungsform enthält die Tricarbonsäure mindestens eine Hydroxyl-Gruppe. Die mindestens eine Hydroxl-Gruppe ist unmittelbar so mit einem Kohlenstoffatom der oben beschriebenen aliphatischen Struktur der Tricarbonsäure verbunden, dass die mindestens ein Hydroxyl-Gruppe zusätzlich zu den drei Säuregruppen an der aliphatischen Struktur gebunden ist. Besonders bevorzugt ist genau eine Hydroxyl-Gruppe an der aliphatischen Struktur der Tricarbonsäure. Eine besonders bevorzugte Tricarbonsäure ist Citronensäure.

In einer bevorzugten Ausführungsform sind alle drei Säuregruppen der Tricarbonsäure mit einem Alkohol verestert. Die Alkohole können aromatische und/oder aliphatische Strukturen aufweisen. Weiter bevorzugt sind Alkohole, die 1 bis 30 Kohlenstoffatome, weiter bevorzugt 1 bis 20 Kohlenstoffatome, weiter bevorzugt 1 bis 10 Kohlenstoffatome, weiter bevorzugt 1 bis 8 Kohlenstoffatome, und besonders bevorzugt 1 bis 6 Kohlenstoffatom umfasst. Bevorzugt werden Alkohole mit aliphatischer Struktur verwendet, weiter bevorzugt sind lineare aliphatische Strukturen der Alkohole, besonders bevorzugt sind aliphatische Strukturen, die keine Doppelbindungen aufweisen.

In einer weiter bevorzugten Ausführungsform umfassen die Alkohole ein Vielfaches von 2 Kohlenstoffatomen, d.h. 2, 4, 6, 8, 10, 12, 14, 16, 18 oder 20 Kohlenstoffatome. Weiter bevorzugt sind die Alkohole lineare Aliphaten.
In einer ganz besonders bevorzugten Ausführungsform ist der Alkohol Ethanol. In einer zweiten ganz besonders bevorzugten Ausführungsform ist der Alkohol ein Butanol. In einer alternativen Ausführungsform ist der Alkohol Propanol. Weiter bevorzugt sind alle drei Säuregruppe der Tricarbonsäure mit demselben Alkohol verestert.
In weiteren bevorzugten Ausführungsformen ist die mindestens eine Hydroxylgruppe der Tricarbonsäure zusätzlich mit eine Carbonsäure verestert. Die Carbonsäure ist ausgewählt aus aromatischen oder aliphatischen Carbonsäuren mit 1 bis 40 Kohlenstoffatomen, weiter bevorzugt 1 bis 30 Kohlenstoffatomen, besonders bevorzugt 2 bis 22 Kohlenstoffatomen, die weiter bevorzugt linear angeordnet sind und in weiter bevorzugten Ausführungsformen die Kohlenstoffzahl ein Vielfaches von 2 ist. Ganz besonders bevorzugt ist die Hydroxylgruppe mit einer Essigsäure verestert.

In weiteren bevorzugten Ausführungsformen ist die mindestens eine Hydroxylgruppe der Tricarbonsäure mit dem Rest R_{OH} verethert. Der Rest R_{OH} umfasst 1 bis 40 Kohlenstoffatome, weiter bevorzugt 1 bis 30 Kohlenstoffatomen, besonders bevorzugt 2 bis 22 Kohlenstoffatomen, wobei in besonders bevorzugten Ausführungsformen die Kohlenstoffzahl ein Vielfaches von 2 ist und weiter bevorzugt dieser Alkohol eine lineare aliphatische Struktur hat. In weiter bevorzugten Ausführungsformen handelt es sich um Polyethylenglykol oder Polypropylenglykol. Weiter bevorzugt ist Polethylenglykol. Bevorzugt sind in den oben genannten Ausführungsformen neben den Sauerstoffatomen der drei Carboxylgruppen der Tricarbonsäure und ihrer Hydroxylgruppe keine weiteren Heteroatome in dem Ester vorhanden.

In alternativen Ausführungsformen enthält die Tricarbonsäure mindestens eine Amingruppe. In bevorzugten Ausführungsformen bildet eine Carbonsäure mit dieser Amingruppe ein Säureamid. Diese Carbonsäure ist ausgewählt aus aromatischen oder aliphatischen Carbonsäuren mit 1 bis 40 Kohlenstoffatomen, weiter bevorzugt 1 bis 30 Kohlenstoffatomen, besonders bevorzugt 1 bis 22 Kohlenstoffatomen, wobei in besonders bevorzugten Ausführungsformen die Kohlenstoffzahl in der Carbonsäure ein Vielfaches von 2 ist.

In weiteren bevorzugten Ausführungsformen bildet die mindestens eine Amingruppe der Tricarbonsäure mit mindestens einem Rest R' ein sekundäres Amin oder mit einem zweiten Rest R" ein tertiäres Amin. Die Reste R' und R" umfassen unabhängig voneinander 1 bis 40 Kohlenstoffatome weiter bevorzugt 1 bis 30 Kohlenstoffatome, besonders bevorzugt 2 bis 22 Kohlenstoffatome, wobei in besonders bevorzugten Ausführungsformen die Kohlenstoffzahl ein Vielfaches von 2 ist. In weiter bevorzugten Ausführungsformen ist der Rest ein Polyethylenglykol oder Polypropylenglykol, bevorzugt ist Polethylenglykol.

In einer ganz besonders bevorzugten Ausführungsform handelt es sich bei dem als zweiten Weichmacher verwendeten Ester einer Tricarboxylsäure um 2-Acetoxy-1,2,3-tricarboxylsäure-tri-butylester.

Das Verfahren zur Veresterung der 3 Hydroxylgruppen des Glycerins mit mindestens einer Monocarbonsäure zu einem erfindungsgemäßen Weichmacher wird bevorzugt derart durchgeführt, dass das Glycerin in einem Reaktionsgefäß vorgelegt wird und eine Monocarbonsäure, bevorzugt Essigsäure, umgesetzt wird. Bevorzugt wird die Mischung unter Rühren erhitzt. Bevorzugt erfolgt die Umsetzung bis zu einer equimolaren Menge der Säuregruppen der Carbonsäure zu den Alkoholgruppen des Glycerins. Das bei der Reaktion entstehende Wasser wird kontinuierlich abdestilliert. Mittels der Kontrolle der OH-Zahl können die verbliebenen Alkoholgruppen, durch Bestimmung der Säurezahl die noch nicht umgesetzten Säuregruppen, bestimmt werden. Die Reaktion der Esterbildung kann durch die Zugabe von Katalysatoren, wie z.B. Titantetrabutylat, beschleunigt werden.
Für die Verwendung als Weichmacher in Polyurethanen ist eine möglichst geringe Säurezahl des Glycerincarbonsäureesters, bevorzugt des Glycerintricarbonsäureesters vorteilhaft, da freie Säuregruppen zum Abbau der ggf. zum Einsatz kommenden Polyesterpolyurethane beitragen können und somit deren Stabilität negativ beeinflussen würden.

In einigen bevorzugten Ausführungsformen sind eine, zwei oder drei Hydroxylgruppen des Glycerins mit einer Monocarbonsäure verestert, bevorzugt sind zwei oder drei der Hydroxylgruppen mit mindestens einer Carbonsäure verestert, besonders bevorzugt sind alle drei Hydroxylgruppen des Glycerins mit einer Monocarbonsäure verestert.

In einigen bevorzugten Ausführungsformen liegen verschiedene Monocarbonsäuren im Glycerinester vor. In anderen bevorzugten Ausführungsformen sind die veresterten Hydroxylgruppen des Glycerins mit derselben Monocarbonsäure verestert.

Die erfindungsgemäßen Weichmacher haben bevorzugt als Eigenfarbe eine Hazenzahl kleiner 100, besonders bevorzugt kleiner 50, insbesondere kleiner 30. Dies garantiert, dass das TPU eine niedrige Eigenfarbe hat.

Die Weichmacher (i) weisen bevorzugt einen Alkaligehalt kleiner 40 ppm, besonders bevorzugt kleiner 15 ppm, insbesondere kleiner 5 ppm auf.

Die erfindungsgemäßen Weichmacher haben üblicherweise einen Wassergehalt von kleiner 0,2 Gew.-%, bevorzugt kleiner 0,05 Gew.-%, besonders bevorzugt kleiner 0,02 Gew.-%. Ein zu hoher Wassergehalt führt zu einem Schäumen der Produkte bei Zugabe von Isocyanat, zur unerwünschten Bildung von Harnstoff und zur Herabsetzung der mechanischen Eigenschaften.

Bei den thermoplastischen Kunststoffen, die in Kombination mit dem Weichmacher (i) eingesetzt werden können handelt es sich bevorzugt um Acrylnitril-Butadien-Styrol (ABS), Polyamide (PA), Polylactat (PLA), Polymethylmethacrylat (PMMA), Polycarbonat (PC), Polyethylenterephthalat (PET), Polybutylenphthalat (PBT), , Polyetherketon (PEEK) und Polyvinylchlorid (PVC)und thermoplastisches Polyurethan (TPU), besonders bevorzugt ist thermoplastisches Polyurethan (TPU).

Der erfindungsgemäße Weichmacher (i), ggf. gemeinsam mit dem Weichmacher, der Ester einer Tricarbonsäure ist, ist in dem thermoplastischen Kunststoff, bevorzugt dem thermoplastischen Polyurethan, in einer Menge von 1 bis 80 Gew.-%, bevorzugt in einer Menge von 1 bis 70 Gew.-%, besonders bevorzugt von 5 bis 50 Gew.-%, insbesondere von 10 bis 40 Gew.-% enthalten, jeweils bezogen auf das Gesamtgewicht des thermoplastischen Kunststoffes enthaltend den Weichmacher (i).
Die Ester der Tricarbonsäure werden im Verhältnis zu den erfindungsgemäßen Weichmachern bevorzugt in einem Gewichts-Verhältnis von 2:1 bis 1:10, besonders bevorzugt in einem Gewichts-Verhältnis von 1:1 bis 1:5 und ganz besonders bevorzugt in einem Gewichts-Verhältnis von 1:1,5 bis 1: 3 eingesetzt.

Die Herstellung von thermoplastischen Polyurethanen ist bekannt. Die thermoplastischen Polyurethane enthaltend den erfindungsgemäßen Weichmacher (i) können bevorzugt durch Umsetzung von (a) Isocyanaten mit (b) gegenüber Isocyanaten reaktiven Verbindungen mit einem Molekulargewicht von 0,5 kg/mol bis 1 kg/mol und gegebenenfalls (c) Kettenverlängerungsmitteln mit einem Molekulargewicht von 0,05 kg/mol bis 0,499 kg/mol gegebenenfalls in Gegenwart von (d) Katalysatoren und/oder (e) üblichen Hilfsstoffen erhalten werden.
Der Weichmacher wird in einer bevorzugten Ausführungsform mindestens einem der Ausgangsstoffe bei der Herstellung der TPU zudosiert, in einer anderen bevorzugten Ausführungsform wird er dem bereits hergestelltem TPU, bevorzugt in einem Extruder, zugemischt. Das thermoplastische Polyurethan kann thermoplastisch weiterverarbeitet werden, ohne dass die Wirkung der erfindungsgemäßen Weichmacher verloren geht.

Die bei der Herstellung des bevorzugten thermoplastischen Polyurethans (TPU) üblicherweise verwendeten Komponenten (a) Isocyanat, (b) gegenüber Isocyanaten reaktive Verbindungen, (c) Kettenverlängerungsmittel sowie gegebenenfalls (d) Katalysatoren und/oder (e) üblichen Hilfsstoffen sollen im Folgenden beispielhaft beschrieben werden:
Die Komponenten (a) Isocyanat, (b) gegenüber Isocyanaten reaktive Verbindungen, (c) Kettenverlängerungsmittel werden einzeln oder zusammen auch als Aufbaukomponenten angesprochen.

Als organische Isocyanate (a) werden bevorzugt aliphatische, cycloaliphatische, araliphatische und/oder aromatische Isocyanate eingesetzt, weiter bevorzugt Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-Cyclohexan-diisocyanat und/oder 4,4'-, 2,4'- und 2,2'-Dicyclohexylmethan-diisocyanat, 2,2'-, 2,4'-und/oder 4,4'-Diphenylmethandiisocyanat (MDI), 1,5-Naphthylendiisocyanat (NDI), 2,4-und/oder 2,6-Toluylendiisocyanat (TDI), Diphenylmethandiisocyanat, 3,3'-Dimethyldiphenyl-diisocyanat, 1,2-Diphenylethandiisocyanat und/oder Phenylendiisocyanat. Besonders bevorzugt wird 4,4'MDI eingesetzt.

Als gegenüber Isocyanaten reaktive Verbindungen (b) werden bevorzugt Polyesterole, Polyetherole und/oder Polycarbonatdiole verwendet, die üblicherweise auch unter dem Begriff "Polyole" zusammengefaßt werden. Die zahlenmittleren Molekulargewichte dieser Polyole von 0,5 kg/mol bis 8 kg/mol, bevorzugt 0,6 kg/mol bis 5 kg/mol, insbesondere 0,8 kg/mol bis 3 kg/mol, und bevorzugt einer mittleren Funktionalität von 1,8 bis 2,3, bevorzugt 1,9 bis 2,2, insbesondere 2. Bevorzugt weisen die Verbindungen (b) nur primäre Hydroxylgruppen auf.

Als Kettenverlängerungsmittel (c) können bevorzugt aliphatische, araliphatische, aromatische und/oder cycloaliphatische Verbindungen mit einem Molekulargewicht von 0,05 kg/mol bis 0,499 kg/mol, bevorzugt 2-funktionelle Verbindungen, eingesetzt werden, beispielsweise Diamine und/oder Alkandiole mit 2 bis 10 C-Atomen im Alkylenrest, insbesondere Ethandiol, Propandiol-1,3, Butandiol-1,4, Hexandiol-1,6 und/oder Di-, Tri-, Tetra-, Penta-, Hexa-, Hepta-, Okta-, Nona- und/oder Dekaalkylenglykole mit 2 bis 8 Kohlenstoffatomen, bevorzugt entsprechende Oligo- und/oder Polypropylenglykole, wobei auch Mischungen der Kettenverlängerer eingesetzt werden können. Bevorzugt haben die Verbindungen (c) nur primäre Hydroxylgruppen.

Katalysatoren (d), welche insbesondere die Reaktion zwischen den NCO-Gruppen der Diisocyanate (a) und den Hydroxylgruppen der gegenüber Isocyanaten reaktiven Verbindung (b) und dem Kettenverlängerungsmittel (c) beschleunigen, sind in einer bevorzugten Ausführungsform tertiäre Amine, insbesonder Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen wie Titansäureester, Eisenverbindungen, bevorzugt Eisen-(III)- acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat.
Die Katalysatoren (d) werden bevorzugt in Mengen von 0,0001 bis 0,1 Gew.-Teilen pro 100 Gew.-Teile der mit Isocyanten reakiven Verbindung (b) eingesetzt. Bevorzugt werden Zinnkataylsatoren eingesetzt, insbesondere Zinndioktoat.

Neben Katalysatoren (d) können den Aufbaukomponenten (a) bis (c) auch neben den erfindungsgemäßen Weichmachern (i) übliche Hilfsmittel (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Stabilisatoren weitere Stabilisatoren, z.B. gegen Hydrolyse, Licht, Hitze oder Verfärbung, anorganische und/oder organische Füllstoffe, Verstärkungsmittel und Weichmacher. Als Hydrolyseschutzmittel werden bevorzugt oligomere und/oder polymere aliphatische oder aromatische Carbodiimide verwendet. Um die erfindungsgemäßen TPU gegen Alterung zu stabilisieren, können dem TPU bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S.98-S136.

Nähere Angaben über die oben genannten Hilfsmittel sowie Zusatzstoffe sind der Fachliteratur zu entnehmen, z.B. aus Plastics Additive Handbook, 5th edition, H. Zweifel, ed, Hanser Publishers, München, 2001.

Zur Einstellung der Härte von TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt. Die Umsetzung kann bei üblichen Kennzahlen erfolgen, bevorzugt bei einer Kennzahl von 60 bis 130, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Aufbaukomponente (a) ein aktives Wasserstoffatom, d.h. eine gegenüber Isocyanaten reaktive Funktion, der Aufbaukomponenten (b) und (c). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozeß erfolgen.

Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (c), (d) und/oder (e) einzeln oder als Gemisch in den Extruder eingeführt, bevorzugt bei Temperaturen von 100 bis 280°C, weiter bevorzugt bei 140 °C bis 250°C zur Reaktion gebracht, das erhaltene TPU wird extrudiert, abgekühlt und granuliert.

In einer bevorzugten Ausführungsform wird zumindest der Weichmacher (i) zur Herstellung des thermoplastischen Polyurethans, bevorzugt ggf. auch mindestens ein zweiter Weichmacher, der Ester einer Tricarbonsäure ist, während und/oder nach der Herstellung des thermoplastischen Kunststoffes zugegeben. Weiter bevorzugt ist im Falle der Herstellung von TPU die Zugabe parallel zu den verwendeten Komponenten (a) Isocyanat, (b) gegenüber Isocyanaten reaktive Verbindungen, (c) Kettenverlängerungsmittel sowie gegebenenfalls (d) Katalysatoren und/oder (e) üblichen Hilfsstoffen.

Die Verarbeitung der erfindungsgemäßen thermoplastischen Polyurethane enthaltend zumindest den Weichmacher (i), die üblicherweise als Granulat oder in Pulverform vorliegen, zu den gewünschten Endprodukten erfolgt nach üblichen Verfahren mittels Spritzguss-, Extrusions-, Schäum- und/oder Pressverfahren. Bevorzugt sind Spritzguss, Extrusion, Spinnverfahren, Sinterverfahren, auch als "powder-slush"-Verfahren, in einer anderen bevorzugten Ausführungsform wird das Produkt auch aufgeschäumt. Hierzu wird dem thermoplastischen Polyurethan ein chemisches und/oder physikalisches Treibmittel oder ein Gas zugesetzt. Auf diese Weise werden geschäumte Endprodukte hergestellt.

Die erfindungsgemäßen thermoplastischen Polyurethane, enthaltend mindestens Weichmacher (i), werden zur Herstellung von Endprodukten, insbesondere Formkörpern verwendet, bevorzugte Formkörper sind Rollen, Schuhsohlen, Verkleidungen in Automobilen, Schläuche, Beschichtungen, Kabel, Profile, Laminate, Fußböden für Gebäude und Transport, Steckverbindungen, Kabelstecker, Faltenbälge, Schleppkabel, Solarmodule, Wischerblätter, Kabelummantelungen, Dichtungen, Riemen, "non woven" Gewebe, Dämpfungselemente Folien oder Fasern.
Ebenfalls bevorzugt sind Schäume, besonders bevorzugt Schäume sind Sättel oder Kissen, die in einer bevorzugten Ausführungsform aus einem Blockschaum herausgetrennt werden, in einer anderen bevorzugten Ausführungsform in einer Form geschäumt werden.

Ein bevorzugtes Herstellungsverfahren für Endprodukte aus den erfindungsgemäßen thermoplastischen Kunststoffen erfolgt in der Weise, dass die thermoplastischen Polyurethane vor oder während der Verarbeitung in einem Lösungsmittel gelöst werden. In einem anderen bevorzugten Verfahren werden Produkte mit dem thermoplastischen Polyurethan beschichtet und hierzu vorher das erfindungsgemäße thermoplastische Polyurethan in einem Lösungsmittel gelöst.
Bevorzugte Lösungsmittel für thermoplastisches Polyurethan sind gewählt aus der Gruppe der ionischen Flüssigkeiten, Dimethylformamid, Methylethylketon, Aceton, Tetrahydrofuran, Ethylacetat, bevorzugt Tetrahydrofuran und Dimethylformamid.

Alle mit dem Weichmacher (i) hergestellten Zwischen- und Endprodukte weisen die eingangs dargestellten Vorteile auf.

Die Erfindung umfasst auch alle hier aufgeführten Kombinationen von Ausführungsformen, die nicht ausdrücklich erwähnt, sind, die sich dem Fachmann aber durch Kombinationen der aufgeführten Ausführungsformen unmittelbar ergeben.

Weiterhin ist Gegenstand der Erfindung die Mischung der erfindungsgemäßen thermoplastischen Polyurethane mit mindestens einem weiteren Kunststoff. Bevorzugt wir thermoplastisches Polyurethan Mischung mit mindestens einem weiteren Kunststoff eingesetzt der bevorzugt ausgewählt wird aus der Gruppe Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetherketon (PEEK) und Polyvinylchlorid (PVC).

### Beispiele

In den folgenden Beispielen werden die Herstellung und die Eigenschaften von Polyurethanen gezeigt. Die erfindungsgemäßen Materialien bzw. Mischungen wurden in einem one-shot-Verfahren auf einem Reaktionsextruder oder eine Bandanlage hergestellt. Die Zugabe der Weichmacher kann entweder direkt im Reaktionsschritt erfolgen oder durch Einquellen der Weichmacher in bereits produzierten Polyurethangranulate. Dieses Einquellen erfolgt bevorzugt mittels eines beheizbaren Mischers oder durch Weichmacherzugabe während eines Extrusionsschrittes

### Beispiel 1 (Vergleich)

420 Teile 4,4'-Diphenylmethandiisocyanat, 88,8 Teile Kettenverlängerer Butandiol1,4 und 700 Teile Polytetrahydrofuran mit einer zahlenmittleren Molmasse von 1 kg/mol werden in einem Reaktionsextruder zu TPU synthetisiert, wobei die Zonentemperaturen des Extruders zwischen 140 °C und 210° C liegen.. Des weiteren werden 15,3 Teile eines phenolischen Antioxidanz und 25 ppm einer 25 %igen Lösung aus Dioctyladipat von Zinndioktoat als Reaktionskatalysator hinzu gegeben. Das so hergestellte TPU-Granulat wird im Spritzguss zu Prüfkörpern umgeformt und daraus ausgestanzte S2-Prüfstäbe (nach DIN 53504) mechanischen Tests unterzogen.

### Beispiel 2 (erfindungsgemäß)

Der Rezeptur aus Beispiel 1 werden während der Reaktion 306,2 Teile Glycerintributyrat (entsprechend 20 Gew.%) zugegeben.
Der Weichmacher wird vom TPU homogen aufgenommen.

### Beispiel 3 (Vergleich)

Der Rezeptur aus Beispiel 1 werden während der Reaktion 306,2 Teile Diethylhexyladipat (entsprechend 20 Gew.%) zugegeben.
Der Weichmacher wird vom TPU nicht aufgenommen, die Granulate sind inhomogen und schmierig.

### Beispiel 4 (Vergleich)

312 Teile 4,4'-Diphenylmethandiisocyanat, 82,1 Teile Kettenverlängerer Butandiol1,4 und 800 Teile Polybutyladipat mit einer zahlenmittleren Molmasse von 2400 g/mol aus Butandiol1,4 und Adipinsäure werden im Handgußverfahren zu TPU synthetisiert. Des weiteren werden 6,4 Teile eines Hydrolysestabilisators (oligomeres Carbodiimid aus TMDXI = Tetramethylxylyldiisocyanat) und 50 ppm einer 25%igen Lösung von Zinndioktoat als Reaktionskatalysator hinzu gegeben. Die erhaltene Schwarte wird 15 Stunden bei 80°C im Umluftofen getempert und anschließend zerkleinert. Das so hergestellte TPU-Granulat wird im Spritzguss zu Prüfkörpern umgeformt und daraus ausgestanzte S2-Prüfstäbe (nach DIN 53504) mechanischen Tests unterzogen.

### Beispiel 5 (erfindungsgemäß)

Der Rezeptur aus Beispiel 4 werden während der Reaktion 300,2 Teile Glycerintriacetat (entsprechend 20 Gew.%) zugegeben.
Der Weichmacher wird vom TPU homogen aufgenommen.

### Beispiel 6 (Vergleich)

Der Rezeptur aus Beispiel 4 werden während der Reaktion 300,2 Teile Diethylhexyladipat (entsprechend 20 Gew.%) zugegeben.
Der Weichmacher wird vom TPU nicht komplett aufgenommen, die Granulate sind inhomogen und schmierig.

### Beispiel 7 (Vergleich)

282 Teile 4,4'-MDI, 71,7 Teile Kettenverlängerer Butandiol1,4 und 641 Teile eines Polymerdiols aus Adipinsäure, Ethandiol1,2, Butandiol1,4, letztere im Massenverhältnis 1:1, der zahlenmittleren Molmasse von 2000 g/mol werden in einem Reaktionsextruder zu TPU synthetisiert, wobei die Zonentemperaturen des Extruders zwischen 140 °C und 210° C liegen.. Des weiteren werden 5 Teile eines Hydrolysestabilisators (oligomeres Carbodiimid aus TMDXI = Tetramethylxylyldiisocyanat) und 0,5 Teile eines Gleitmittels (teilverseifter Montansäureester) während der Reaktion zugegeben.

Das so hergestellte TPU-Granulat wird im Spritzguss zu Prüfkörpern umgeformt und daraus ausgestanzte S2-Prüfstäbe (nach DIN 53504) mechanischen Tests unterzogen.

### Beispiel 8 (erfindungsgemäß)

Der Rezeptur aus Beispiel 7 werden während der Reaktion 20 Gew.% Glyzerintriacetat zugegeben.
Der Weichmacher wird vom TPU homogen aufgenommen.

### Beispiel 9 (Vergleich)

Der Rezeptur aus Beispiel 7 werden während der Reaktion 20 Gew.% Diethylhexyladipat zugegeben.
Der Weichmacher wird vom TPU nicht komplett aufgenommen, die Granulate sind inhomogen und schmierig.

### Eigenschaften der erhaltenen Produkte

Die mechanischen Prüfungen erfolgen nach DIN 53505 (Shore), 53504 (Zugfestigkeit, Reißdehnung) und DIN 53516 (Abrieb).

**Tabelle 1**

| Beispiele | Shore Härte | Zugfestigkeit / MPa | Reißdehnung / % | Abrieb / mm³ |
|---|---|---|---|---|
| 1 Vergl. | 87 A | 45 | 610 | 39 |
| 2 | 82 A | 37 | 660 | 53 |
| 3 Vergl. | ∼84 A | n.b. | n.b. | n.b. |
| 4 Vergl. | 86 A | 49 | 590 | 41 |
| 5 | 80 A | 39 | 700 | 50 |
| 6 Vergl. | ∼85 A | n.b. | n.b. | n.b. |
| 7 Vergl. | 86 A | 48 | 620 | 40 |
| 8 | 77 A | 37 | 710 | 57 |
| 9 Vergl. | ∼84 A | n.b. | n.b. | n.b. |

| | | | | |
|---|---|---|---|---|
| n.b. = nicht bestimmbar, da keine geeigneten Prüfkörper hergestellt werden konnten | | | | |

Aus der Tabelle ist erkennbar, dass die Shorehärten thermoplastischer Polyurethane mit den erfindungsgemäßen Weichmachern deutlich unter denen der Basismaterialien liegen. Die mechanischen Eigenschaften der erhaltenen Produkte sind mit denen handelsüblichen TPU vergleichbar, wobei berücksichtigt werden muss, dass mit Abnahme der Shorehärte die Produkte insgesamt weicher und elastischer werden.

### Beispiel 10 (Vergleich)

260 Teile 4,4'-MDI, 32,2 Teile Kettenverlängerer Ethandiol1,2, 1000 Teile eines Polymerdiols aus Adipinsäure, Ethandiol1,2, Butandiol1,4, letztere im Massenverhältnis 1:1, der zahlenmittleren Molmasse von 2000 g/mol und 231,2 Teile Acetyltributylcitrat werden in einem Reaktionsextruder zu TPU synthetisiert, wobei die die Zonentemperaturen des Extruders zwischen 140 °C und 210° C liegen. Des weiteren werden 10 Teile eines Hydrolysestabilisators (oligomeres Carbodiimid aus TMDXI = Tetramethylxylyldiisocyanat), 3,08 Teile eines phenolischen Antioxidanz und 4,62 Teile eines Gleitmittels (teilverseifter Montansäureester) während der Reaktion zugegeben. Aus dem so hergestellten TPU-Granulat werden Extrusionsstränge hergestellt, an denen die Prüfwerte bestimmt werden.

### Beispiel 11 (erfindungsgemäß)

Das Produkt aus Beispiel 10 wird in einem beheizbaren Mischer (Typ DiOsa) auf 85°C aufgeheizt und mit 25 Gew % Glycerintriacetat versetzt. Nach einem Mischschritt von 90 Minuten wird das Produkt unter Rühren auf Raumtemperatur abgekühlt. Aus dem so hergestellten TPU-Granulat werden Extrusionsstränge hergestellt, an denen die Prüfwerte bestimmt werden.
Der Weichmacher wird vom TPU homogen aufgenommen.

### Beispiel 12 (erfindungsgemäß)

Das Produkt aus Beispiel 10 wird in einem beheizbaren Mischer (Typ DiOsa) auf 85°C aufgeheizt und mit 45 Gew % Glycerintriacetat versetzt. Nach einem Mischschritt von 180 Minuten wird das Produkt unter Rühren auf Raumtemperatur abgekühlt. Aus dem so hergestellten TPU-Granulat werden Extrusionsstränge hergestellt, an denen die Prüfwerte bestimmt werden.
Der Weichmacher wird vom TPU homogen aufgenommen.

### Beispiel 13 (Vergleich)

Das Produkt aus Beispiel 10 wird in einem beheizbaren Mischer (Typ DiOsa) auf 85°C aufgeheizt und mit 25 Gew % Acetyltributylcitrat versetzt. Nach einem Mischschritt von 90 Minuten wird das Produkt unter Rühren auf Raumtemperatur abgekühlt. Das TPU Granulat hat den Weichmacher nicht aufgenommen, Extrusionsstränge können nicht hergestellt werden.
Der zusätzliche Weichmacher wird vom TPU kaum aufgenommen.

### Beispiel 14 (Vergleich)

Das Produkt aus Beispiel 10 wird in einem beheizbaren Mischer (Typ DiOsa) auf 85°C aufgeheizt und mit 25 Gew % Diethylhexyladipat versetzt. Nach einem Mischschritt von 90 Minuten wird das Produkt unter Rühren auf Raumtemperatur abgekühlt. Das TPU Granulat hat den Weichmacher nicht aufgenommen, Extrusionsstränge können nicht hergestellt werden.
Der Weichmacher wird vom TPU nicht aufgenommen.

### Beispiel 15 (Vergleich)

Das Produkt aus Beispiel 10 wird in einem beheizbaren Mischer (Typ DiOsa) auf 85°C aufgeheizt und mit 25 Gew % Dipropylenglykol-dibenzoat versetzt. Nach einem Mischschritt von 90 Minuten wird das Produkt unter Rühren auf Raumtemperatur abgekühlt. Das TPU Granulat hat den Weichmacher nicht aufgenommen, Extrusionsstränge können nicht hergestellt werden.
Der Weichmacher wird vom TPU kaum aufgenommen.

Eigenschaften der erhaltenen Produkte

Die Prüfungen erfolgen nach DIN 53505 (Shore)

**Tabelle 2**

| Beispiele | Shore Härte |
|---|---|
| 10 Vergleich | 47 A |
| 11 | 36 A |
| 12 | 29 A |
| 13 Vergleich | 43 A |
| 14 Vergleich | n.b. ∼45 A |
| 15 Vergleich | n.b. ∼45 A |

| | |
|---|---|
| n.b. = nicht klar bestimmbar, da keine komplette Weichmacheraufnahme erfolgt ist | |

Aus der Tabelle ist erkennbar, dass der erfindungsgemäße Weichmacher in thermoplastischem Polyurethan seiner Wirksamkeit auch in Gegenwart anderer weichmacherartiger Verbindungen zeigt. Eine synergistische Wirkung von Glycerintriacetat in Kombination mit Acetyltributylcitrat zeigt sich in den Beispielen 11 und 12.

## Patentansprüche

1. Thermoplastisches Polyurethan enthaltend mindestens einen Weichmacher, **dadurch gekennzeichnet, dass** ein erster Weichmacher (i) auf einem Glycerin basiert und mindestens eine Hydroxylgruppe des Glycerins mit einer Monocarbonsäure (ii) verestert ist, die 1, 2, 3, 4, 5 oder 6 Kohlenstoffatome, weiter bevorzugt 2, 3 oder 4 Kohlenstoffatome und ganz besonders bevorzugt 2 Kohlenstoffatome enthält.

2. Thermoplastisches Polyurethan nach Anspruch 1, **dadurch gekennzeichnet, dass** alle drei Hydroxylgruppen des Glycerins verestert sind.

3. Thermoplastisches Polyurethan gemäß einem der Ansprüche 1 bis 2, **dadurch gekennzeichnet, dass** diese für den Kontakt mit Lebensmitteln oder in der Verwendung als Bedarfsgegenstand oder für medizinische Anwendungen zugelassen sind.

4. Thermoplastisches Polyurethan gemäß einem der Ansprüche 1 bis 3, **dadurch gekennzeichnet, dass** der Weichmacher (i) als Eigenfarbe eine Hazenzahl kleiner 100 aufweist.

5. Thermoplastisches Polyurethan gemäß einem der Ansprüche 1 bis 4, **dadurch gekennzeichnet, dass** der Weichmacher (i) einen Alkaligehalt kleiner 40 ppm aufweist.

6. Thermoplastisches Polyurethan gemäß einem der Ansprüche 1 bis 5 Anspruch 1, **dadurch gekennzeichnet, dass** der Weichmacher (i) einen Wassergehalt von kleiner 0,2 Gew.-% aufweist.

7. Thermoplastisches Polyurethan gemäß einem der Ansprüche 1 bis 6, **dadurch gekennzeichnet, dass** der mindestens eine Weichmacher in dem thermoplastischen Kunststoff in einer Menge von 1 bis 60 Gew.-%, bevorzugt von 1 bis 70 Gew.-%, besonders bevorzugt von 5 bis 50 Gew.-%, insbesondere von 10 bis 40 Gew.-% enthalten ist, bezogen auf das Gesamtgewicht des thermoplastischen Kunststoffes enthaltend den Weichmacher.

8. Thermoplastisches Polyurethan gemäß einem der Ansprüche 1 bis 7, **dadurch gekennzeichnet, dass** der thermoplastische Kunststoff eine Shore-Härte von mehr als 15 Shore A und gleichzeitig weniger als 60 Shore A, weiter bevorzugt weniger als 50 Shore A, noch weiter bevorzugt weniger als 40 Shore A, insbesondere weniger als 35 Shore A.

9. Thermoplastisches Polyurethan gemäß einem der Ansprüche 1 bis 8, **dadurch gekennzeichnet, dass** zusätzlich mindestens ein Weichmacher enthalten ist, der Ester einer Tricarbonsäure ist.

10. Thermoplastisches Polyurethan gemäße einem der Ansprüche 1 bis 9, **dadurch gekennzeichnet, dass** der Ester der Tricarbonsäure im Verhältnis zu dem Weichmacher (i) in einem Gewichts-Verhältnis von 2:1 bis 1:10, bevorzugt in einem Gewichts-Verhältnis von 1:1 bis 1:5 und ganz besonders bevorzugt in einem Gewichts-Verhältnis von 1:1,5 bis 1: 3 vorhanden sind.

11. Verfahren zur Herstellung von thermoplastischem Polyurethan, **dadurch gekennzeichnet, dass** man dem thermoplastischen Kunststoff gemäß einem der Ansprüche 1 bis 10 zumindest den Weichmacher (i) während und/oder nach der Herstellung des thermoplastischen Kunststoffes zugibt.

12. Verfahren zur Herstellung von Produkten aus thermoplastischem Polyurethan gemäß einem der Ansprüche 1 bis 10, **dadurch gekennzeichnet, dass** diese Produkte mittels Spritzguss-, Extrusions-, Schäum- und/oder Pressverfahren hergestellt werden.

13. Verwendung von thermoplastischem Polyurethan gemäß einem der Ansprüche 1 bis 10 zur Herstellung von Produkten mittels Spritzguß-, Extrusions-, Schäum und/oder Pressverfahren.

14. Verfahren zur Herstellung von Endprodukten aus thermoplastischem Polyurethan gemäß einem der Ansprüche 1 bis 10 und/oder Beschichtung von Gegenständen mit derartigen thermoplastischen Polyurethan, **dadurch gekennzeichnet, dass** dasie thermoplastischen Kunststoffe vor oder während der Verarbeitung in einem Lösungsmittel gelöst werden.

15. Verfahren zur Herstellung oder Beschichtung von Endprodukten mit thermoplastischem Polyurethan gemäß einem der Ansprüche 1 bis 10, **dadurch gekennzeichnet, dass** das thermoplastische Polyurethan vor oder während des Verfahrens in einem Lösungsmittel gelöst wird.

16. Verwendung des Esters von Glycerin mit mindestens einer Carbonsäure gemäß Anspruch 1 als Weichmacher für thermoplastisches Polyurethan.

17. Produkt basierend auf einem thermoplastischen Polyurethan nach einem der Ansprüche 1 bis 10 auch in Mischung mit anderen Kunststoffen

## Claims

1. A thermoplastic polyurethane comprising at least one plasticizer, wherein a first plasticizer (i) is based on glycerol, and at least one hydroxy group of the glycerol has been esterified with a monocarboxylic acid (ii) which comprises 1, 2, 3, 4, 5, or 6 carbon atoms, more preferably 2, 3, or 4 carbon atoms, and very particularly preferably 2 carbon atoms.

2. The thermoplastic polyurethane according to claim 1, wherein all three hydroxy groups of the glycerol have been esterified.

3. The thermoplastic polyurethane according to claim 1 or 2, wherein this material has been approved for contact with foods, or for use as a consumer item, or for medical applications.

4. The thermoplastic polyurethane according to any of claims 1 to 3, wherein the Hazen number representing the intrinsic color of the plasticizer (i) is less than 100.

5. The thermoplastic polyurethane according to any of claims 1 to 4, wherein the alkali content of the plasticizer (i) is smaller than 40 ppm.

6. The thermoplastic polyurethane according to any of claims 1 to 5, wherein the water content of the plasticizer (i) is smaller than 0.2% by weight.

7. The thermoplastic polyurethane according to any of claims 1 to 6, wherein the amount of the at least one plasticizer comprised within the thermoplastic is from 1 to 60% by weight, preferably from 1 to 70% by weight, particularly preferably from 5 to 50% by weight, in particular from 10 to 40% by weight, based on the total weight of the thermoplastic comprising the plasticizer.

8. The thermoplastic polyurethane according to any of claims 1 to 7, wherein the Shore hardness for the thermoplastic is more than 15 Shore A and at the same time smaller than 60 Shore A, more preferably smaller than 50 Shore A, still more preferably smaller than 40 Shore A, and in particular smaller than 35 Shore A.

9. The thermoplastic polyurethane according to any of claims 1 to 8, which also comprises at least one plasticizer which is an ester of a tricarboxylic acid.

10. The thermoplastic polyurethane according to any of claims 1 to 9, wherein the ratio by weight between the ester of the tricarboxylic acid and the plasticizer (i) is from 2:1 to 1:10, preferably from 1:1 to 1:5, and very particularly preferably from 1:1.5 to 1:3.

11. A process for producing thermoplastic polyurethane, which comprises adding at least the plasticizer (i) to the thermoplastic according to any of claims 1 to 10, during and/or after production of the thermoplastic.

12. A process for producing products from thermoplastic polyurethane according to any of claims 1 to 10, which comprises producing said products by means of injection molding, extrusion, foaming, and/or compression processes.

13. The use of thermoplastic polyurethane according to any of claims 1 to 10 for producing products by means of injection molding, extrusion, foaming, and/or compression processes.

14. A process for producing final products from thermoplastic polyurethane according to any of claims 1 to 10, and/or coating of articles with thermoplastic polyurethane of this type, which comprises dissolving the thermoplastics in a solvent, prior to or during processing.

15. A process for producing or coating final products with thermoplastic polyurethane according to any of claims 1 to 10, which comprises dissolving the thermoplastic polyurethane in a solvent, prior to or during the process.

16. The use of the ester of glycerol with at least one carboxylic acid according to Claim 1 as plasticizer for thermoplastic polyurethane.

17. A product based on a thermoplastic polyurethane according to any of claims 1 to 10 inter alia in a mixture with other plastics.

## Revendications

1. Polyuréthane thermoplastique contenant au moins un plastifiant, **caractérisé en ce qu'**un premier plastifiant (i) est à base d'un glycérol et au moins un groupe hydroxyle du glycérol est estérifié par un acide monocarboxylique (ii), qui contient 1, 2, 3, 4, 5 ou 6 atomes de carbone, plus préférablement 2, 3 ou 4 atomes de carbone et de manière tout particulièrement préférée 2 atomes de carbone.

2. Polyuréthane thermoplastique selon la revendication 1, **caractérisé en ce que** les trois groupes hydroxyle du glycérol sont estérifiés.

3. Polyuréthane thermoplastique selon l'une quelconque des revendications 1 à 2, **caractérisé en ce que** celui-ci est autorisé pour le contact avec des aliments ou dans l'utilisation comme produit d'utilisation courante ou pour des applications médicales.

4. Polyuréthane thermoplastique selon l'une quelconque des revendications 1 à 3, **caractérisé en ce que** le plastifiant (i) présente, comme couleur propre, un indice de voile inférieur à 100.

5. Polyuréthane thermoplastique selon l'une quelconque des revendications 1 à 4, **caractérisé en ce que** le plastifiant (i) présente une teneur en alcali inférieure à 40 ppm.

6. Polyuréthane thermoplastique selon l'une quelconque des revendications 1 à 5, **caractérisé en ce que** le plastifiant (i) présente une teneur en eau inférieure à 0,2% en poids.

7. Polyuréthane thermoplastique selon l'une quelconque des revendications 1 à 6, **caractérisé en ce que** ledit au moins un plastifiant est contenu dans le matériau synthétique thermoplastique en une quantité de 1 à 60% en poids, de préférence de 1 à 70% en poids, de manière particulièrement préférée de 5 à 50% en poids, en particulier de 10 à 40% en poids, par rapport au poids total du matériau synthétique thermoplastique contenant le plastifiant.

8. Polyuréthane thermoplastique selon l'une quelconque des revendications 1 à 7, **caractérisé en ce que** le matériau synthétique thermoplastique présente une dureté Shore supérieure à 15 Shore A et simultanément inférieure à 60 Shore A, plus préférablement inférieure à 50 Shore A, encore plus préférablement inférieure à 40 Shore A, en particulier inférieure à 35 Shore A.

9. Polyuréthane thermoplastique selon l'une quelconque des revendications 1 à 8, **caractérisé en ce qu'**en plus au moins un plastifiant est contenu, qui est un ester d'un acide tricarboxylique.

10. Polyuréthane thermoplastique selon l'une quelconque des revendications 1 à 9, **caractérisé en ce que** les esters de l'acide tricarboxylique sont présents par rapport au plastifiant (i) dans un rapport pondéral de 2:1 à 1:10, de préférence dans un rapport pondéral de 1:1 à 1:5 et de manière tout particulièrement préférée dans un rapport pondéral de 1:1,5 à 1:3.

11. Procédé pour la préparation de polyuréthane thermoplastique, **caractérisé en ce qu'**on ajoute au matériau synthétique thermoplastique selon l'une quelconque des revendications 1 à 10 au moins le plastifiant (i) pendant et/ou après la préparation du matériau synthétique thermoplastique.

12. Procédé pour la préparation de produits en polyuréthane thermoplastique selon l'une quelconque des revendications 1 à 10, **caractérisé en ce que** ces produits sont préparés par un procédé de moulage par injection, d'extrusion, de moussage et/ou de pressage.

13. Utilisation du polyuréthane thermoplastique selon l'une quelconque des revendications 1 à 10, pour la préparation de produits par un procédé de moulage par injection, d'extrusion, de moussage et/ou de pressage.

14. Procédé pour la préparation de produits finis en polyuréthane thermoplastique selon l'une quelconque des revendications 1 à 10, et/ou revêtement d'objets par un tel polyuréthane thermoplastique, **caractérisé en ce que** ces matériaux synthétiques thermoplastiques sont dissous dans un solvant avant ou pendant la transformation.

15. Procédé pour la préparation de ou le revêtement de produits finis par du polyuréthane thermoplastique selon l'une quelconque des revendications 1 à 10, **caractérisé en ce que** le polyuréthane thermoplastique est dissous dans un solvant avant ou pendant le procédé.

16. Utilisation de l'ester de glycérol avec au moins un acide carboxylique selon la revendication 1 comme plastifiant pour du polyuréthane thermoplastique.

17. Produits à base d'un polyuréthane thermoplastique selon l'une quelconque des revendications 1 à 10, également en mélange avec d'autres matériaux synthétiques.
